Europäisches Patentamt

European Patent Office

Office européen des brevets

(19)

(11) Publication number: **0 404 346**
**A1**

# (12) EUROPEAN PATENT APPLICATION

(21) Application number: **90305509.3**

(22) Date of filing: **21.05.90**

(51) Int. Cl.⁵: **C08L 77/00**, //(C08L77/00, 51:04,79:04)

(30) Priority: **01.06.89 US 359558**

(43) Date of publication of application:
**27.12.90 Bulletin 90/52**

(84) Designated Contracting States:
**AT BE CH DE DK ES FR GB GR IT LI LU NL SE**

(71) Applicant: **ROHM AND HAAS COMPANY**
**Independence Mall West**
**Philadelphia Pennsylvania 19105(US)**

(72) Inventor: **Freed, William Thayer**
**9 Edna Horn Drive, Stockton**
**New Jersey 08559(US)**
Inventor: **Liwak, Susan Marie**
**112 Hilltop Court**
**Langhorne, Pennsylvania 19047(US)**
Inventor: **Sederel, Louis C.**
**20 Rue de la Buffa**
**F-06000 Nice(FR)**

(74) Representative: **Angell, David Whilton et al**
**ROHM AND HAAS (UK) LTD. European**
**Operations Patent Department Lennig House**
**2 Mason's Avenue**
**Croydon, Surrey, CR9 3NB(GB)**

(54) **Polyamide, polyglutarimide and impact modifier blends.**

(57) Blends of aliphatic polyamides, polyglutarimides containing residual acid and/or anhydride groups, and certain core/shell impact modifiers are disclosed, exhibiting after thermally compounding an improved balance of impact strength, modulus, and heat distortion temperature. With certain functionalized impact modifiers, the reacted blends are particularly suitable for melt-forming operations, such as blow-molding.

EP 0 404 346 A1

## POLYAMIDE, POLYGLUTARIMIDE AND IMPACT MODIFIER BLENDS

This invention is concerned with blends of polyamide, polyglutarimide, and core/shell impact modifier which, by the selection of components offer unexpectedly improved properties, with such blends when thermally processed, to the process for preparing such blends and to toughened objects prepared by molding, such as by blow-molding, shaping, or otherwise forming the reacted blends.

By "polyglutarimide" we mean a polymer which contains mers, preferably more than 50 weight percent of mers, having the cyclic structure (N-alkyl) dimethylglutarimide, (N-cycloalkyl)dimethylglutarimide, or (N-hydrogen)dimethylglutarimide, wherein the alkyl group contains 1 to 8 carbon atoms and the cycloalkyl group contains 3 to 8 carbon atoms. Since the disclosure in US-A-4,246,374 thermally stable polyglutarimides and their preparation, such polymers, especially those prepared by the treatment of poly-(methyl methacrylate) with monomethylamine in a devolatilizing extruder, have been employed as clear glazing or protective materials having acceptable impact and modulus properties and with a higher service temperature than most clear thermoplastics. In the preparation of polyglutarimides, whether from polymers having mers of methyl methacrylate, methacrylic acid, or methacrylic anhydride, it is difficult to avoid forming or retaining a low percentage of mers of methacrylic acid or anhydride. Means to remove such groups are taught in US-A-4,727,117 wherein for reduction of acid content in such polyglutarimides by a post-polymerization reaction, has led to poly(glutarimides) of generally improved chemical miscibility, although the non-acid reduced polyglutarimides are more miscible with nylon. In the present invention, the use of non-acid-reduced polyglutarimides is preferred. Especially preferred is a non-acid-reduced polyglutarimide containing anhydride as well as acid groups.

By "polyamide" we mean polymers which contain mers of the formula --C(O)-NH-- or --C(O)--N(alkyl)--, the former being preferred. They may be formally represented by the products of condensation of a dibasic amine with a dibasic acid, such as hexamethylene adipamide, by the product of self-condensation of an aminoacid, such as omega-aminoundecanoic acid, or by the product of a ring-opening reaction of a cyclic lactam, such as caprolactam, laurylactam, or pyrrolidone. They may contain alkylene, arylene, or aralkylene repeating units. Preferred are alkylene units. Especially preferred are polymers of hexamethylene adipamide and of polycaprolactam.

To improve the toughness or impact strength of polyamides, many impact modifiers have been prepared. Especially useful are polyolefins having copolymerized or grafted acid or anhydride functionality, and core/shell polymers having a rubbery core based on a polyacrylate or a polybutadiene rubber, that core being surrounded with a shell of a hard polymer which adheres or admixes with the polyamide, such as a polymer of methyl methacrylate, of styrene/acrylonitrile copolymer, or styrene/methyl methacrylate copolymer. The shell may further contain mers having chemically reactive functional groups capable of reacting, usually through an acid or anhydride group, with an amine end group or groups of the nylon, to improve the impact strength substantially. Core/shell modifiers without these functional groups are not as effective in improving impact strength of polyamides without extensive pre-dispersion or pre-compounding. Certain of these functionalized core/shell modifiers may contain an additional ungrafted separate phase consisting of a hard polymer containing mers of a lower alkyl methacrylate and mers from an unsaturated acid, such as a copolymer of methyl methacrylate with methacrylic acid; this component of the impact modifier is reported to aid in isolation of the modifier and to contribute to better dispersion during mixing of the modifier with the polyamide. It is known that core/shell impact modifiers having a diene or acrylate rubbery core and a hard thermoplastic outer shell, such as from styrene or methyl methacrylate mers, and further containing acid or anhydride functions, may be reacted with polyamides to increase the melt viscosity to an extent to allow processes such as blow molding to be performed on the reacted blend. It is known to admix polyglutarimides and polyamides to prepare useful materials. It is further known to add impact modifiers to such blends. It is further known to add polyolefins containing reactive functional groups. However the improvement of impact strength and/or other properties, such as processability, especially blow moulding properties, of polyamide/polyglutarimide blends remains a problem.

We have now surprisingly found that, by using certain specific polyamides, polyglutarimides, and non-functionalized core/shell impact modifiers in combination, the impact strength or other properties of polyamide/polyglutarimide blends can be improved and by using certain specific polyamides, polyglutarimides, and functionalized core/shell impact modifiers in combination, the processing, including blow molding, of polyamide/polyglutarimide blends can be improved.

This invention provides a blend of polyamide, polyglutarimide and impact modifier wherein (a) the polyamide comprises aliphatic polyamide; (b) the polyglutarimide contains residual acid and anhydride groups; (c) the impact modifier comprises core/shell polymer wherein the core is a polymer comprising at least 50 percent by weight of butadiene and/or alkyl acrylate units.

The blends preferably contain, per 100 parts by weight of the three specified components, from 50 to 85 parts by weight of polyamide, from 5 to 25 parts of polyglutarimide, and from about 5 to 30 parts, of impact modifier. The preferred amount of impact modifier in such blends is 7.5 to 25 parts by weight per 100 parts of blend of the three specified components.

The polyamide used in the blend may be any of a large class of polyamides based on aliphatic, cycloaliphatic, or aromatic groups in the chain. The polyamide may be crystalline or amorphous. Preferred are crystalline polyamides containing aliphatic groups, such as polycaprolactam (nylon 6), polylauryllactam (nylon 12), poly(omega-aminoundecanoic acid) (nylon 11), poly hexamethylene adipamide (nylon 6,6) and poly(hexamethylene sebacamide) (nylon 6,10). Especially preferred are the aliphatic polyamides which contain a preponderance of mers from caprolactam, omega-aminoundecanoic acid, lauryl lactam, hexamethylenediamine adipate or hexamethylenediamine sebacate. Nylon polymers will have, unless specially polymerized in the presence of excess acid or post-reacted, one or more terminal amine groups. Under certain conditions, both end groups may be amine-substituted. In polyamides having a low degree of branching, there may be more than two amine groups available per polyamide chain. In combination with the impact modifiers bearing amine-reactive functional groups, polyamides containing one or more terminal amine groups are preferred in combination.

The polyglutarimides are polymers which contain mers, preferably more than 50 weight percent of mers, of the cyclic structure (N-alkyl)dimethylglutarimide, (N-cycloalkyl) dimethylglutarimide, or (N-hydrogen)dimethylglutarimide, where alkyl refers to 1 to 8 carbon atoms and cycloalkyl to 3 to 8 carbon atoms. The technology taught in US-A-4,246,374 relates to reaction with a variety of amines; preferred in the present invention are those glutarimide polymers prepared from primary N-alkylamines of eight or fewer carbon atoms, such as methylamine, ethylamine, propylamine, n-butylamine, i-butylamine, or n-octylamine, from cycloalkyl amines such as cyclopentyl or cyclohexyl amine, or from ammonia or ammonia precursors, such as urea. Preferred is the polymer prepared from monomethylamine or other materials which yield (N-methyl)dimethylglutarimide mers. The method of thi patent is preferred for preparing such glutarimide polymers, but other preparative methods known to the art may be employed. Other mers may be present in the glutarimide polymer, such as mers of the alkyl or cycloalkyl methacrylate from which the polyglutarimide was prepared. Other mers may be present in the starting polymer, such as mers of styrene, acrylic acid, methacrylic acid methoacrylic anhydride, or an alkyl acrylate. Other mers are formed during the preparation of the polyglutarimide, such as N-alkylmethacrylamide mers, methacrylic acid mers, or mers of methacrylic anhydride. Such formed-in-situ mers need not be removed or converted to ester or other functionality, for example by the method of US-A-4727117, in preparing the blends of the present invention. Indeed, it is preferred that they not be removed. Our experience in preparing polyglutarimides by the method of US-A-4246374 from poly(methyl methacrylate) with methylamine has been that conversion to a polymer of Vicat softening point ca. 150° C produces more anhydride than converting to a polymer of Vicat ca. 170° C, although the acid content is about the same.

The impact modifier of the present invention is a core/shell impact modifier, wherein one or more initial or early stages (cores) of rubbery polymer are prepared by emulsion, and a final shell layer is polymerized in the presence of the core. The rubbery polymer is a polymer mainly of mers of one or more of butadiene or of an alkyl acrylate preferably $C_3$ to $C_8$ (alkyl)acrylate, the alkyl acrylate most preferably being n-butyl acrylate. The preferred rubbery polymer may also contain a minor amount of mers of other alkyl (meth)-acrylates, of vinyl aromatic monomers, such as styrene or acrylonitrile mers. The core polymer may be crosslinked by incorporation of polyunsaturated monomers such as divinylbenzene, polyol esters of (meth)-acrylic acid, (meth)allyl esters of (meth)acrylic acid or maleic acid, and the like. The polyunsaturated monomers, if present, may be effectively used at levels from about 0.05 to about 5 percent by weight of the rubbery stage. The elastomer may be formed in one or more steps, and may be formed by polymerization in the presence of a "seed" polymer to control polymer particle size. The polymerizations are preferably conducted by emulsion polymerization. Typical useful core polymers are copolymers of butadiene/styrene with greater than 75% butadiene, copolymers of butadiene/butyl acrylate, homopolymers of butadiene, copolymers of butadiene/ acrylonitrile containing greater than 70% butadiene, copolymers of butyl acrylate with up to about 20% styrene, homopolymers of 2-ethylhexyl acrylate, and the like. Especially with polymers based mainly on alkyl acrylate mers, the presence of polyunsaturated monomers, preferably from about 0.5 to about 2 %, is preferred. Especially preferred is a polyunsaturated monomer having two or more unlike unsaturated groups, such as diallyl maleate and allyl methacrylate.

One or more shell layers are polymerized in the presence of the core polymer, preferably with chemical grafting occurring due to the presence of residual double bonds in the core polymer. The shell layer will preferably be comprised predominantly of mers of vinyl aromatic or alkyl or cycloalkyl methacrylate

3

monomer, preferably styrene or methyl methacrylate. Other monomers, such as alkyl or cycloalkyl (meth)-acrylates, (meth)acrylonitrile and styrene may also be present. Either the core or shell, preferably the outer shell, may also contain monomers having chemically reactive functional groups capable of reacting with the amine end group or groups of the polyamide present in the blend. Such functional groups may include acid, acid halide and anhydride. Preferred is an anhydride, such as maleic anhydride and itaconic anhydride, maleic anhydride being especially preferred, or an acid. Acid functionality may include that present from mers of methacrylic acid, acrylic acid, itaconic acid, monoalkyl fumaric acid, monoalkyl maleic acid, methacryloxyacetic acid, methacryloxypropionic acid, acryloxypropionic acid, and the like. Many of the impact modifiers useful in the present invention are soft materials and difficult to isolate in free-flowing powdery form. To aid in the isolation, spray-drying additives or coagulation additives, such as finely divided silica, stearate-coated calcium carbonate, and the like may be added to the impact modifier before, during, or after isolation in levels from about 0.5 to about 5, preferably from about 0.5 to about 2 percent. There may also be used polymeric additives useful in isolation, such as poly(methyl methacrylate) in levels from about 1 to about 5 percent.

Particularly useful in this regard are linear copolymers of mers from a (meth)acrylate ester, preferably mers from an alkyl (meth)acrylate, and mers from an unsaturated acid or anhydride copolymerizable with the mers of the methacrylic ester, such as taught in EP-A-259,097. It is preferred that the linear copolymer be employed in combination with the core/shell modifier having reactive functionality. The mers of the unsaturated acid or anhydride are preferably selected from mers of maleic anhydride, or mers from methacrylic acid, acrylic acid, itaconic acid, acryloxypropionic acid, a monoalkyl ester of maleic acid, or a monoalkyl ester of fumaric acid. Especially preferred is methacrylic acid. The weight ratio of mers of the alkyl methacrylate to mers of the unsaturated acid is generally in the range of from about 20:1 to about 1:1. Such additives may be used at from about 0.1 to about 15 parts per 100 parts of core/shell impact modifier to aid in isolation of the modifier, aid in dispersion of the modifier in the polyamide/polyglutarimide matrix, and appear to interact with the matrix to increase melt strength and so aid in blow-molding. Especially useful are copolymers of methyl methacrylate with from about 5 to about 50 parts of methacrylic acid. We do not believe it necessary that a chemical reaction occur involving the amine end groups of the polyamide, but in the case of the impact modifier containing the reactive functionality, it is desirable that such a reaction occur. We do not yet fully understand exactly how components chemically react to form the reacted blend. The end amine groups of the polyamide may interact with any acid or anhydride functionality present in the shell of the core/shell modifier. Some interaction may also occur with the acid groups of the linear copolymer, or with the acid or anhydride or imide groups of the polyglutarimide. We have ascertained however that the interaction produces a diminution of titrable amine from the polyamide, and also produces substantial increase in melt viscosity, allowing the blend to be melt-processed, yet the blend is thermoplastic and may be processed on conventional equipment for thermoplastics. The components may be blended over a broad range of ratios. The ratio of polyamide to polyglutarimide may vary from about 95 to 5 to about 5 to 95. It is preferred that the polyamide be the major component, and more preferred that the ratio of polyamide to imide be from about 3 to 1 to about 10 to 1. Considering the total of polyamide and polyglutarimide as the matrix, the ratio of impact modifier (which may include the linear copolymer) to the matrix may be from about 1 to 99 to about 30 to 70. Preferably the impact modifier will be present as about 10 to about 30 parts of the total polymeric components of the blend.

The linear copolymer may be present in the impact modifier in amounts from about 0.1 to about 15 parts per 100 parts by weight of the impact modifier. The individual components of the blend may contain additives normally found in such materials when purchased commercially. Thus, the polyamide, the polyglutarimide, and/or the impact modifier may contain one or more thermal stabilizers, such as antioxidants, heat stabilizers and ultraviolet stabilizers. They may further contain lubricants, mold release agents, and/or flame retardants. The blend may further contain fillers, such as glass in strand or chopped form, wollastonite, mica, talc and/or, carbon black.

Additives may also be introduced into the melt during processing, including prior to, during, or after the reaction of the polyamide end groups. The blend may be formed by conventional mixing of polymeric powders and pellets, such as by tumbling or drum mixing, or may be compounded by means such as mill rolls. The blend is heated to cause reaction of the amine end group or groups of the polyamide by any method that will blend the components in the melt and allow for removal of any water liberated during the reaction. Preferred is a single- or twin-screw extruder, which may also be used to form pellets of the reacted blend for further processing, or may directly conduct the reacted melt to a separate zone or zones suitable for injection molding or extrusion. The extruder is preferably equipped with a devolatilizing vent.

The temperature of processing may be from about 230°C (if all components are molten at that temperature) to about 330°C, although the reaction may be conducted outside that range for certain polyamides and impact modifiers. More preferred is from about 260°C to about 320°C.

The reacted blend may be formed into many useful objects by molding or extrusion, such as automotive parts, computer housings and tough films. The reacted blend is especially useful in producing blow-molded articles, such as bottles, fuel tanks and automotive bumpers which cannot be readily prepared from polyamides, said blow-molded objects having a useful balance of toughness, modulus, and heat distortion temperature. Such blow molding may be accomplished by either injection- or extrusion blow molding. Preferred for such uses are the blends containing the linear copolymer.

The invention will now be illustrated by the following Examples in which all percentages are by weight unless otherwise specified and all reagents are of good commercial quality unless otherwise specified.

EXAMPLES

A. All of the polymers containing mers of (N-methyl)dimethylglutarimide and mers of methacrylic acid were prepared by the method of United States Patent 4,246,374, utilizing a poly(methyl methacrylate) of MW ca. 150,000 as precursor and monomethylamine. Reactions were carried out to either ca. 66 or ca. 84 mol % (76 or 90 weight of glutarimide mers. There were no additives incorporated after imidization except for a low level of tris-(nonylphenyl phosphite).

EXAMPLES 1 and 2 (Comparative) and EXAMPLE 3

These examples illustrate the preparation and properties of the blend of a polycaprolactam, a non-acid-reduced polyglutarimide of Vicat softening point ca. 150°C, and a reactive impact modifier as taught in Example 16 of EP-A-259,097. The polycaprolactam was a commercial material, with a melt flow rate of 14.94 by ASTM Test Method 1238-86, Condition H (230°C, total load 1.2 kg.), and a reduced specific viscosity of 1.65 to 1.70 in meta-cresol. The polymers were pre-blended, extruded into pellets in a twin-screw counter-rotating intermeshing screw extruder equipped with a devolatilizing zone at a melt temperature of ca. 270°C. The pellets were then molded into test pieces in a reciprocating injection molding apparatus at a 40 second time cycle, a melt temperature of ca. 270°C, and a mold temperature of 107°C. In Table I, Example 1 is the unmodified polyamide, Example 2 a reacted blend of 70 parts of the polyamide and 30 parts of the reactive impact modifier, and Example 3 a mixture of 60 parts polyamide, 10 parts of polyglutarimide, and 30 parts of the impact modifier. All properties were measured on dry, as molded samples. Addition of the glutarimide increases the tensile modulus and the heat distortion temperature, while the impact strength remains substantially higher than for the unmodified polyamide. All test methods were standard ASTM test methods.

EP 0 404 346 A1

TABLE 1

|  | Example 1 | Example 2 | Example 3 |
|---|---|---|---|
| Properties |  |  |  |
| Tensile strength |  |  |  |
| at yield, kPa*$10^{-4}$ | 5.52 | 4.07 | 4.07 |
| at break kPa*$10^{-4}$ | 3.31 | 5.03 | 4.48 |
| Tensile elongation, % |  |  |  |
| at yield | 4 | 4 | 4 |
| at break | 210 | 199 | 170 |
| Tensile modulus, mPa | 1930 | 1800 | 1860 |
| Distortion Temperature under load, °C | 64 | 56 | 60 |
| Notched Izod impact strength, joules/m | 85.4 | 961(a) | 694(b) |
| Unnotched Izod impact strength, joules | 32.5 | 59.6 | 69.1 |
| Tensile impact strength, joules/m$^{2}$* $10^{-4}$ | 3.50 | 1.21 | 2.68 |

(a) 5 of 5 samples showed ductile breaks
(b) 3 of 5 samples showed ductile breaks

EXAMPLES 4 and 5 (Comparative) and EXAMPLE 6

This example illustrates the improvement in performance over unmodified polyamide or impact modified polyamide when a polyglutarimide is present. The polyamide was that of Example 1, the polyglutarimide that used in Example 3; the impact modifier does not contain reactive functional groups in the shell, and was a core/shell modifier prepared by sequential polymerization in emulsion, similar to that described in U.S.-A-4,096,202 and U.S.-A-4,167,505. In this example, impact strength and modulus are improved by the presence of the imide. It is known to be difficult to disperse such impact modifiers in polyamide which contains no glutarimide; see U.S. -A-4,167,505. Example 4 is the unmodified polyamide; Example 5 contains 80 parts of polyamide and 20 parts of the impact modifier having no functional groups and of a 80 parts butyl acrylate core/20 parts methyl methacrylate shell, the core also containing a triacrylate and allyl methacrylate in low levels. Example 6 contains 70 parts of polyamide, 20 parts of the same impact modifier, and 10 parts of the polyglutarimide from Example 3.

TABLE 2

|  | Example 4 | Example 5 | Example 6 |
|---|---|---|---|
| Properties |  |  |  |
| Tensile strength |  |  |  |
| at yield, kPa*$10^{-4}$ | 5.80 | 5.80 | 6.36 |
| at break kPa*$10^{-4}$ | 2.44 | 4.40 | 4.54 |
| Tensile elongation, % |  |  |  |
| at yield | 4 | 4 | 4 |
| at break | 210 | 60 | 50 |
| Tensile modulus,mPa | 2200 | 2260 | 2390 |
| Distortion Temperature under load, °C | 64 | 64 | 70 |
| Notched Izod impact strength, joules/m | 32 | 67 | 91 |
| Unnotched Izod impact strength, joules | 32.5 | 19.0 | 35.2 |
| Tensile impact strength, joules/m$^{2}$* $10^{-4}$ | 3.50 | 1.21 | 2.68 |

6

EXAMPLES 7 to 13 (Comparative) and EXAMPLES 14 to 16

In these examples is demonstrated the improvement in melt flow behavior toward creating a blend suitable for blow molding with a blend of polycaprolactam (nylon 6), the polyglutarimide of Example 3, and a core-shell impact modifier as described in Example 2. The polyamide was a commercial product from Akzo, Inc., designated Akulon M223D, relative viscosity (1% in meta-cresol = 2.3), melt flow index 73 grams/10 min., measured at 235°C and 5 kg. pressure. Control experiments were performed with a butyl acrylate// methyl methacrylate commercial core/shell polymer having no functional groups capable of reacting with the amine end groups of the nylon. This modifier was also employed in Example 5. The blends were admixed in a Werner-Pfleiderer twin-screw extruder; melt temperature 240-250°C, screw speed 250 rpm; flow rate 10 kg./hr. Pellets from the extrusion were molded into test pieces on an Arburg Allround injection machine. Results on conditioned samples were obtained in an attempt to simulate equilibrium moisture uptake. Molded samples were soaked in water overnight at a temperature of 60C, then stored at 22C and 50-70 % relative humidity under equilibrium weight was reached (a time scale of ca. four weeks). The following mixtures were prepared.

TABLE 3

| Example | Polyamide | Polyglutarimide | Reactive Impact Modifier | Non-Reactive Impact Modifier |
|---|---|---|---|---|
| 7 | 100 | 0 | 0 | 0 |
| 8 | 90 | 10 | 0 | 0 |
| 9 | 82.5 | 17.5 | 0 | 0 |
| 10 | 75 | 25 | 0 | 0 |
| 11 | 80 | 0 | 0 | 20 |
| 12 | 90 | 0 | 10 | 0 |
| 13 | 80 | 0 | 20 | 0 |
| 14 | 62.5 | 17.5 | 0 | 20 |
| 15 | 72.5 | 17.5 | 10 | 0 |
| 16 | 62.5 | 17.5 | 20 | 0 |

Test results are reported in Table 4. The low melt flow rate values for Example 16, combined with excellent impact resistance and slightly improved modulus, suggests its utility for blow-molding.

TABLE 4

| Blend | Izod, J/m, Dry | Izod, J/m, Conditioned | Tensile Modulus,MPa Dry | Tensile Modulus, MPa Conditioned | Melt Flow, g/10 min. |
|---|---|---|---|---|---|
| Ex. 7 | 43 | 200 | 3220 | 1109 | 73 |
| Ex. 8 | 33 | 272 | 3300 | 1112 | 47 |
| Ex. 9 | 32 | 173 | 3240 | 1417 | 30 |
| Ex. 10 | 30 | 118 | 3240 | 1465 | 19 |
| Ex. 11 | 83 | 96 | 2260 | 860 | 50 |
| Ex. 12 | 98 | 1131 | 2620 | 897 | 14 |
| Ex. 13 | 220 | 1264 | 2300 | 758 | <1 |
| Ex. 14 | 254 | 254 | 2250 | 1006 | - |
| Ex. 15 | 125 | 960 | 2670 | 1254 | 3.2 |
| Ex. 16 | 289 | 1165 | 2380 | 1094 | <1 |

EXAMPLES 17-20

This example illustrates attempts to blow mold blends based on core/shell acrylic impact modifiers with and without reactive functionality. Bottles were blown in a Bekum blowmolder; 80 rpm speed; zone temperatures were from 190°C feed to 240°C at die. The target was a bottle of 1000 cc volume or a blown film of density ca. 89 grams/square meter of surface without holes and with uniform wall thickness. Only the objects blown from the blends of Examples 19 and 20 achieved this performance. The glutarimide was that of Example 2, the functionalized impact modifier that of Example 3, and the non-functionalized impact modifier that of Example 5. The polyamide was that of Example 7.

TABLE 5

| Example | Polyamide | Polyglutarimide | Reactive Impact Modifier | Non-Reactive Impact Modifier |
|---------|-----------|-----------------|--------------------------|------------------------------|
| 17 | 72.5 | 20 | 0 | 7.5 |
| 18 | 65 | 20 | 0 | 15 |
| 19 | 72.5 | 20 | 7.5 | 0 |
| 20 | 65 | 20 | 15 | 0 |

EXAMPLE (Comparative) and EXAMPLES 22-24

These examples illustrate the use of a second glutarimide, having a higher degree of imidization and a higher Vicat softening temperature, in combination with polycaprolactam (as used in Example 7), the non-functionalized impact modifier of Example 5, and the functionalized modifier of Example 2.

TABLE 6

| Example | Polyamide | Polyglutarimide | Reactive Impact Modifier | Non-Reactive Impact Modifier |
|---------|-----------|-----------------|--------------------------|------------------------------|
| 21 | 82.5 | 17.5 | 0 | 0 |
| 22 | 62.5 | 17.5 | 0 | 20 |
| 23 | 72.5 | 17.5 | 10 | 0 |
| 24 | 62.5 | 17.5 | 20 | 0 |

Test results are reported in Table 7. The combination of properties, are improved over polycaprolactam or polycaprolactam/ polyglutarimide alone, although the polyglutarimide of lower Vicat softening temperature of Example 7-16 is preferred. The blend of Example 24 will be useful in forming blow-molded articles.

TABLE 7

| Blend | Izod, J/m, Dry | Izod, J/m, Conditioned | Tensile Modulus,MPa Dry | Tensile Modulus, MPa Conditioned | Melt Flow, g/10 min. |
|---|---|---|---|---|---|
| Ex. 21 | 33 | 80 | 3240 | 1473 | 50 |
| Ex. 22 | 25 | 27 | 2170 | 1045 | 2.1 |
| Ex. 23 | 52 | 117 | 2860 | 1310 | 3.8 |
| Ex. 24 | 73 | 97 | 2370 | 1147 | <1 |

EXAMPLES 25 to 31 (Comparative) and EXAMPLES 32 to 39

In these examples is demonstrated the improvement in performance behavior with a blend of nylon 6,6, the polyglutarimide of Example 1, and a core-shell impact modifier related to those described in U.S.-A-4,148,846. Specifically the modifier was prepared in emulsion with a core of butyl acrylate/ butylene glycol dimethacrylate/allyl methacrylate ca. 98.4/1/0.6, followed by a shell of styrene 57.3/ methyl methacrylate 36/ maleic anhydride 6.7, the core/shell ratio being ca. 78/22. The emulsion was stabilized with small amounts of trisnonylphenyl phosphite and a hindered phenol antioxidant, then coagulated with magnesium sulfate. Ca. 5% of a high molecular weight (ca. 1,000,000) methyl methacrylate/ethyl acrylate (90/10) emulsion-prepared polymer was coagulated in the presence of this polymer to aid in isolation, as per US Patent 4,463,131. The nylon 6,6 (poly(hexamethylenediamine adipate) was a commercial grade known as Akulon AP-140, relative viscosity (1% in meta-cresol = 2.5). Control experiments were performed with a butyl acrylate// methyl methacrylate commercial core/shell polymer having no functional groups capable of reacting with the amine end groups of the nylon. This impact modifier was that used in Example 5. Table 7 describes the blend compositions. The samples were pelletized on equipment similar to that for Example 1, but with melt temperatures ranging from 260 to 280°C, and injection molded with a melt temperature ca. 285-295°C into a mold heated to 85°C. Properties are shown in Table 9. The melt flow was measured at 5 kg. at 275°C, and is expressed in grams/10 minutes.

TABLE 8

| Experiment | Nylon 6,6 | Polyglutarimide | Non-Reactive Impact Modifier | Reactive Impact Modifier |
|---|---|---|---|---|
| 25 | 100 | 0 | 0 | 0 |
| 26 | 90 | 10 | 0 | 0 |
| 27 | 80 | 20 | 0 | 0 |
| 28 | 92.5 | 0 | 7.5 | 0 |
| 29 | 85 | 0 | 15 | 0 |
| 30 | 92.5 | 0 | 0 | 7.5 |
| 31 | 85 | 0 | 0 | 15 |
| 32 | 82.5 | 10 | 7.5 | 0 |
| 33 | 75 | 10 | 15 | 0 |
| 34 | 72.5 | 20 | 7.5 | 0 |
| 35 | 65 | 20 | 15 | 0 |
| 36 | 82.5 | 10 | 0 | 7.5 |
| 37 | 75 | 10 | 0 | 15 |
| 38 | 72.5 | 20 | 0 | 7.5 |
| 39 | 65 | 20 | 0 | 15 |

9

TABLE 9

| Blend | Izod, J/m, Dry | Flexural Modulus,MPa Dry | Melt Flow, g/10 min. |
|---|---|---|---|
| Ex. 25 | 37 | 3040 | 137 |
| Ex. 26 | 30 | 3350 | 65 |
| Ex. 27 | 23 | 3550 | -- |
| Ex. 28 | 70 | 690 | 123 |
| Ex. 29 | 65 | 2370 | 86 |
| Ex. 30 | 90 | 2650 | 148 |
| Ex. 31 | 123 | 2310 | 115 |
| Ex. 32 | 62 | 2900 | 29 |
| Ex. 33 | 117 | 2580 | 2.2 |
| Ex. 34 | 66 | 2900 | 0.2 |
| Ex. 35 | 117 | 2600 | <0.1 |
| Ex. 36 | 55 | 2740 | 57 |
| Ex. 37 | 108 | 2420 | 23 |
| Ex. 38 | 69 | 2890 | 1.9 |
| Ex. 39 | 92 | 2550 | 0.3 |

EXAMPLE 40

A series of blends were made as in Examples 26-39, but with the polyglutarimide containing a higher proportion of mers as shown in Examples 21-24. The values of impact strength and flexural modulus followed the same trends with ratios of components as in Examples 26-39, but there was significantly less decrease in the value of the melt flow rate for the three-component systems.

EXAMPLES 41 to 43 and 46 (Comparative) and EXAMPLES 44,45,47 and 48

This example demonstrates that polyglutarimides whose acid and anhydride group content has been reduced by the method of U.S.-A- 4,727,117 in combination with polycaprolactam and a functionalized impact modifier do not exhibit as much enhancement in toughness as do similar blends wherein the polyglutarimide contains acid and anhydride groups.

Blends were prepared as in Example 7 from the polyamide used in Example 7, the reactive core/shell modifier of Example 2, and either no polyglutarimide, the polyglutarimide of Example 3, or a polyglutarimide prepared by treatment of a polyglutarimide similar to that of Example 3 with trimethyl orthoformate to remove acid and anhydride groups. The softening point of the treated polyglutarimide was ca. 140°C. Blending and testing was as in Example 7.

TABLE 10

| Experiment | Nylon 6 | Non-acid-reduced Polyglutarimide | Acid-reduced Polyglutarimide | Reactive Impact Modifier |
|---|---|---|---|---|
| 41 | 100 | 0 | 0 | 0 |
| 42 | 90 | 0 | 0 | 10 |
| 43 | 82.5 | 17.5 | 0 | 0 |
| 44 | 82.5 | 17.5 | 0 | 10 |
| 45 | 72.5 | 17.5 | 0 | 20 |
| 46 | 82.5 | 0 | 17.5 | 0 |
| 47 | 82.5 | 0 | 17.5 | 10 |
| 48 | 72.5 | 0 | 17.5 | 20 |

TABLE 11

| MPa Blend Conditioned | Izod, J/m, Dry | Izod, J/m, Conditioned | Tensile Modulus,MPa Dry | Tensile Modulus, |
|---|---|---|---|---|
| Ex. 41 | 43 | 200 | 3050 | 1050 |
| Ex. 42 | 220 | 1131 | 2800 | 900 |
| Ex. 43 | 32 | 173 | 3250 | 1350 |
| Ex. 44 | 125 | 960 | 2950 | 1200 |
| Ex. 45 | | | 2650 | 1100 |
| Ex. 46 | 33 | 80 | 3200 | 3250 |
| Ex. 47 | 52 | 117 | 2900 | 1200 |
| Ex. 48 | | | 2650 | 1100 |

## Claims

1. A blend of polyamide, polyglutarimide, and impact modifier characterised in that: (a) the polyamide comprises aliphatic polyamide; (b)the polyglutarimide contains residual acid and anhydride groups; (c) the impact modifier comprises core/shell polymer wherein the core is a polymer comprising at least 50 percent by weight of butadiene and/or alkyl acrylate units.

2. A blend as claimed in Claim 1, wherein the core contains more than 50% by weight of mers of alkyl acrylate, preferably n-butylacrylate.

3. A blend as claimed in Claim 1 or 2, wherein the core contains from 0.05 to five percent by weight of mers of polyunsaturated monomer.

4. A blend as claimed in any preceding Claim wherein the shell polymer contains more than 50% by weight of mers of vinyl aromatic monomer and/or alkyl or cycloalkyl methacrylate.

5. A blend as claimed in any preceding Claim wherein the polyglutarimide comprises more than 50% by weight of mers of (N-hydrogen) dimethylglutarimide, (N-alkyl)dimethylglutarimide, preferably (N-methyl)-dimethylglutarimide, and/or (N-cycloalkyl)dimethylglutarimide.

6. A blend as claimed in any preceding Claim wherein the polyglutarimide contains mers of methyl methacrylate, and mers of methacrylic acid, methacrylic anhydride, styrene and/or alkyl acrylate.

7. A blend as claimed in any preceding Claim wherein the aliphatic polyamide contains more than 50% by weight of mers from caprolactam, omega-aminoundecanoic acid, lauryllactam, hexamethylenediamine adipate and/or hexamethylenediamine sebacate.

8. A blend as claimed in any preceding Claim containing from 50 to 85 parts of polyamide, from 5 to 25 parts of polyglutarimide and from 10 to 30 parts of impact modifier per 100 parts of the three components, and, optionally, linear copolymer in an amount of 0.01 to 1.5 percent by weight of the four components.

9. A blend as claimed in any preceding Claim which contains linear copolymer comprising (meth)-acrylate ester mers and unsaturated acid or anhydride mers, said linear copolymer preferably containing lower alkyl methacrylate mers (preferably methylmethacrylate) and mers of one or more of the following monomers: acrylic acid, methacrylic acid (preferably), itaconic acid, acryloxypropionic acid, monoalkyl esters of maleic acid, monoalkyl ester of fumaric acid, maleic anhydride; most preferably containing mers of methyl methacrylate and methacrylic acid in a weight ratio of 20:1 to 1:1.

10. A blend as claimed in any preceding Claim 11 wherein the impact modifier comprises core/shell polymer which contains chemically reactive functional groups, said functional groups preferably being in the shell.

11. A blend as claimed in Claim 10, wherein the functional groups are in the shell and comprise mers from acrylic acid, methacrylic acid, itaconic acid, acryloxypropionic acid, maleic acid monoalkyl ester, fumaric acid monoalkyl ester, and/or maleic anhydride

12. A sheet, film, molded or otherwise shaped article prepared from a blend as claimed in any preceding Claim.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | CHEMICAL ABSTRACTS, vol. 101, 20th August 1984, page 36, abstract no. 56040j, Columbus, Ohio, US; & JP-A-59 25 836 (TORAY INDUSTRIES, INC.) 09-02-1984 * Abstract * | 1-11 | C 08 L 77/00 // (C 08 L 77/00 C 08 L 51:04 C 08 L 79:04 ) |
| Y | EP-A-0 003 126 (ROHM & HAAS CO.) * Claims 1,4-7 * | 1-11 | |
| A | US-A-4 415 706 (STAAS) * Claims 1,3,4,6-32 * | 1-11 | |
| A | PATENT ABSTRACTS OF JAPAN, vol. 11, no. 307 (C-450)[2754], 7th October 1987; & JP-A-62 96 551 (TORAY IND. INC.) 06-05-1987 * Abstract * | 1-11 | |

TECHNICAL FIELDS
SEARCHED (Int. Cl.5)

C 08 L

The present search report has been drawn up for all claims

| Place of search | Date of completion of the search | Examiner |
|---|---|---|
| THE HAGUE | 06-09-1990 | GLANDDIER A. |